# EUROPEAN PATENT APPLICATION

(11) **EP 2 463 747 A2**
(43) Date of publication of application: **13.06.2012**
(21) Application number: 11192724.0
(22) Date of filing: 09.12.2011
(51) Int. Cl.: G06F 1/16, G06F 1/26

(54) **Casing device for portable electronic device**

(30) Priority: 11.12.2010 US 422151 P; 26.05.2011 US 201161490480 P
(71) Applicant: Sa, Shuang, Richmond, BC V6V 1W5 (CA)
(72) Inventor: Sa, Shuang, Richmond, BC V6V 1W5 (CA)
(74) Representative: Moy, David

(57) **Abstract**

A casing device for use with a portable electronic device to attach a peripheral device to the portable electronic device. For example, the casing device is configured to be mounted onto the portable electronic device in various ways. In one example, the casing device can be formed with a first device compartment for removably receiving and supporting a portable electronic device. In another example, the casing device can be adapted to fit in a receiving compartment in the portable electronic device. The casing device can also be formed to have an accessory compartment for removably receiving and supporting a peripheral device, such as an external rechargeable battery. Additionally or alternatively, the casing device can be configured to allow the peripheral device to be electrically connected to the portable electronic device for battery charging and/or data transferring operation. For example, the peripheral device can be formed as an external battery to supply power to the portable electronic device.

## Description

### CROSS-REFERENCE TO RELATED APPLICATIONS

This patent application claims priority from U.S. Provisional Patent Application Nos. 61/422,151 and 61/490,480 filed December 11, 2010 and May 26, 2011, respectively.

### FIELD OF THE INVENTION

The invention relates generally to an accessory for a portable electronic device, In particular, the invention relates to a casing device for use with a portable electronic device.

### BACKGROUND OF THE INVENTION

Portable electronic devices have been widely used in recent years to allow users to complete various tasks away from traditional fixed workstations. Portable electronic devices are typically powered by rechargeable batteries, which have a limited work time and must be recharged periodically, thereby causing incontinence to the users.

Moreover, many portable electronic devices are designed to carry out a predetermined task and are restricted to a specific use. Consequently, multiple portable electronic devices are required when different tasks are to be completed. For example, to make a purchase at a retail store, an optical scanner is required to obtain the price of a sales item and a credit card reader is required charge the customer of the purchase price. Such usage of multiple electronic devices at point of sale not only complicates the sales transaction but also increases the equipment cost.

The following description provides a solution to the above-mentioned inconvenience and improves the use of various portable electronic devices.

### SUMMARY OF THE INVENTION

The embodiments disclosed herein relate to a casing device for use with a portable electronic device. More specifically, the embodiments described below relate to a casing device for attaching a peripheral device to a portable electronic device. For example, the casing device is configured to be mounted onto the portable electronic device in various ways. In one example, the casing device can be formed with a first device compartment for removably receiving and supporting a portable electronic device. In another example, the casing device can be adapted to fit in a receiving compartment in the portable electronic device.

The casing device can also be formed to have an accessory compartment for removably receiving and supporting a peripheral device, such as an external rechargeable battery. Additionally or alternatively, the casing device can be configured to allow the peripheral device to be electrically connected to the portable electronic device for battery charging and/or data transferring operation. For example, the peripheral device can be formed as an external battery to supply power to the portable electronic device.

According to a first perspective of the invention, a casing device is provided and configured to attach a peripheral device to a portable electronic device. The casing device comprises a main body configured to be attached to a portable electronic device and have an accessory compartment for removably receiving and supporting a peripheral device. The main body allows the peripheral device to be electrically connected with the portable electronic device to supply power to and/or transfer data to and from the portable electronic device, In one example, the main body of the casing device can be configured to allow access to the accessory compartment, whereby a user can insert a peripheral device into or remove a peripheral device from the accessory compartment in the main body after the casing device is attached to a portable device.

in one example, the main body of the casing device is configured so that part of the main body can be received in a battery chamber of a portable electronic device to attach the casing device to such a portable electronic device. The main body of the casing device can comprise an extended portion, which can extend outside the battery chamber of a portable electronic device.

in another example, the main body of the casing device is formed with a device compartment for receiving and supporting a portable electronic device. The device compartment and the accessory compartment can merge into a single compartment, whereby the casing device is capable of holding a portable electronic device and a peripheral device in the single compartment.

The casing device can further comprise an adjustable contact port having a movable portion movably attached to the main body of the casing device. The main body of the casing device is capable of supporting portable electronic devices of different sizes, when the adjustable contact port is adjusted in relation to the main body of the casing device.

The casing device further comprises a first contact port located in the device compartment 10 and configured for electrically connecting with a contact port on a portable electronic device 2. A second contact port is also located in the accessory compartment and configured for electrically contacting with a contact port on a peripheral device. The first and second contact ports are electrically connected.

According to a second perspective of the invention, a casing device is provided and configured to attach a peripheral device to a portable electronic device. The casing device comprises a main body configured to support a portable electronic device and a peripheral device. The casing device also comprises an adjustable contact port having a movable portion movably attached to the main body of the casing device. The main body of the casing device is capable of supporting portable electronic devices of different sizes, when the adjustable contact port is adjusted in relation to the main body of the casing device. In one example, the movable portion of the adjustable contact port is configured to be separable from the main body of the casing device.

The main body of the casing device can be formed to have a device compartment for receiving and supporting a portable electronic device. In one example, the main body of the casing device comprises a device support for supporting a portable electronic device. The movable portion of the adjustable contact port is adjustable in relation to the device support in a direction perpendicular to the device support.

Additionally or alternatively, the main body of the casing device is formed with an accessory compartment for removably receiving and supporting a peripheral device. In one example, the main body of the casing device is formed with an access port to allow access to the accessory compartment, whereby a user can insert a peripheral device into or remove a peripheral device through the access port in the main body after the casing device is attached to a portable device.

According to a third perspective of the invention, a accessory device is provided for use with a portable electronic device. The accessory device comprises a peripheral device and a casing device, which comprises a main body configured to be attached to a portable electronic device and have an accessory compartment for removably receiving and supporting a peripheral device. The main body allows the peripheral device to be electrically connected with the portable electronic device to supply power to and/or transfer data to and from the portable electronic device.

In one example, the peripheral device comprises at least one of a rechargeable battery, a thermometer, an optical scanner, a credit card reader, and a voice recorder. The main body of the casing device can comprise a plurality of accessory compartments for attaching one or more peripheral devices to a portable electronic device.

in another example, the peripheral device comprises a plurality of rechargeable batteries, one or more of which are being used in the casing device during its normal operation of charging an internal battery of a portable electronic device.

in a further example, the main body of the casing device is formed with an access port to allow access to the accessory compartment, whereby a user can insert a peripheral device into or remove a peripheral device through the access port in the main body after the casing device is attached to a portable device.

### BRIEF DESCRIPTION OF THE DRAWINGS

The following description is set forth in connection with the attached drawing figures, which are not necessarily to scale, emphasis instead generally being placed upon illustrating the principles of the invention. In the drawings:
Fig. 1A shows a portable electronic device fitted with a casing device according to a first embodiment;
Fig. 1B is a cross sectional view of the casing device shown in Fig. 1A and fitted with a peripheral device;
Fig. 1C is another cross sectional view of the casing device in Fig. 1A;
Fig. 1D is a bottom view of the casing device in Fig. 1A;
Fig. 2A is a front view of a casing device according to a second embodiment;
Fig. 2B is an exploded cross sectional view of the casing device in Fig. 2A showing a peripheral device in phantom;
Fig. 2C is a rear view of the casing device in Fig. 2A without the accessory cover;
Fig. 3A is a front view of a casing device according to a third embodiment;
Fig. 3B is an exploded cross sectional view of the casing device in Fig. 3A;
Fig. 3C shows a peripheral device mountable in the casing device shown in Fig. 3A;
Fig. 3D is a plan view of the peripheral device in Fig. 3C;
Fig. 4A shows a portable electronic device fitted with a casing device according to a fourth embodiment;
Fig. 4B is an exploded view of the casing device in Fig. 4A showing a peripheral device in phantom;
Fig. 4C is a variation of the casing device shown in Fig. 4A;
Fig. 5A shows a fifth embodiment of a casing device configured to connect with a portable electronic device;
Figs. 5B to 5D are various views of the casing device shown in Fig. 5A;
Fig. 5E is a perspective view showing the Fig. 5A casing device in a separating state;
Figs. 5F to 5G are various views showing the configuration of the main body in the casing device shown in Fig. 5A;
Figs. 5H to 5J are various views showing the main body with its front wall removed to show the second portion of the adjustable contact port;
Figs. 5K and 5L showing the main body of the casing device with its covering member removed revealing the accessory compartment;
Fig. 5M is a perspective view of the covering member of the casing device shown in Fig. 5A;
Figs. 5N to 5P are rear perspective views of the main body in the casing device showing the various positions of the covering member;
Figs. 5Q to 5S are various views of the first movable portion of the casing device shown in Fig. 5A;
Figs. 5T and 5U illustrate the connection of the two portions of the adjustable contact port in the Fig. 5B casing device;
Figs. 5V to 5Z show the casing device of the fifth embodiment being used with various portable electronic devices of different thickness;
Fig. 6A is a rear perspective view of a cover jacket formed according to another embodiment;
Figs. 6B to 6G are various views of the cover jacket shown in Fig. 6A; and
Figs. 7A to 7E show that the Fig. 6A cover jacket secures a casing device to a portable electronic device during the normal operation of the casing device.

### DETAILED DESCRIPTION OF EMBODIMENTS

Various embodiments of the casing device 1 are described below in connection with the drawing figures. In the following description of different embodiments, similar components are designated with the same numeral references and redundant description is omitted.

The casing device 1 is configured for use with a portable electronic device 2, such as a mobile phone. More specifically, the casing device 1 is configured as an accessory device for attaching a peripheral device 3 to a portable electronic device 2. For example, the casing device 1 is formed to be mounted onto the portable electronic device 1. In one example, the casing device 1 can be formed with a first device compartment 10 for removably receiving and supporting a portable electronic device 2. In another example, the casing device 1 can be adapted to fit in a receiving compartment in the portable electronic device 2. The casing device 1 can be mounted onto the portable electronic device 2 in various ways as will be described in great detail in the following embodiments.

The casing device 1 can also be formed with an accessory compartment 20 for removably receiving and supporting a peripheral device 3, such as a rechargeable battery. The accessory compartment 20 can be in various forms and/or at various locations in the casing device 1. After the casing device 1 is mounted onto a portable electronic device 2, the peripheral device 3 can be removably attached to the portable electronic device 2. in other words, after the casing device 1 is mounted onto a portable electronic device 2, the peripheral device 3 can be removably attached to or detached from the portable electronic device 2 without removing the casing device 1 from the portable electronic device 2. In one example, the peripheral device 3 placed inside the second accessory compartment 20 of the casing device 1 is in the form of a rechargeable battery 3. Such rechargeable battery 3 can operate to supply power to the portable electronic device 2 and thus function as a back-up to the internal battery of the portable electronic device 2.

Additionally or alternatively, the casing device 1 can be configured to allow the peripheral device 3 to be electrically connected to the portable electronic device 2 to supply power to and/or transfer data to or from the portable electronic device 2. For example, the casing device 1 can be configured to allow a contact port 3c on the peripheral device 3 to directly electrically connect with the contact port on the portable electronic device 2 after the casing device 1 attaches the peripheral device 3 to the portable electronic device 2. In the alternative, the casing device 1 can be formed with electrical contacts and/or electric circuit for electrically connecting the peripheral device 3 with the portable electronic device 2 as will be described in great detail below.

The casing device 1 described herein can expand the performance and function of the portable electronic device 2 to include that provided by the peripheral device 3 of any of various forms. For example, the peripheral device 3 can be in the form of any of the following devices including, but not limited to, a rechargeable battery, a thermometer, an optical scanner, a credit card reader, an endoscope, a voice recorder, and any combination thereof. In one example, the peripheral device 3 can comprise an optical scanner combined with a rechargeable battery, which can operate to supply power to the optical scanner. Additionally or alternatively, the rechargeable battery in the above-mentioned peripheral device 3 can operate to supply power to the portable electronic device 2 after the peripheral device 3 is mounted onto the portable electronic device 2.

in another example, the peripheral device 3 can be in the form of a rechargeable battery, which can be used to replace or in addition to the internal battery of the portable electronic device 2. For example, the peripheral device 3 can be in the form of a rechargeable battery external to the portable electronic device 2 and capable of supplying power to the portable electronic device 2 in addition to its internal battery. In such a case, after the casing device 1 mounts the external rechargeable battery 3 to the portable electronic device 2, such external rechargeable battery 3 can function as a back-up battery to the portable electronic device 2, thereby prolonging the use time of the internal battery of the portable electronic device 2. Additionally or alternatively, the casing device 1 can allow uninterrupted power supply to and use of the portable electronic device 2 when the external rechargeable battery 3 in the casing device 1 is being removed and replaced, thereby providing convenient usage to the users.

Various structures, features, and advantages of the casing device 1 will become apparent through the following description of the various embodiments.

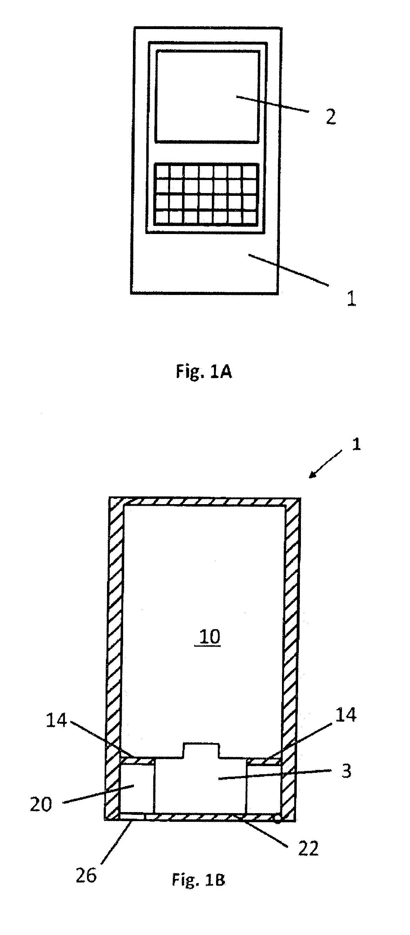

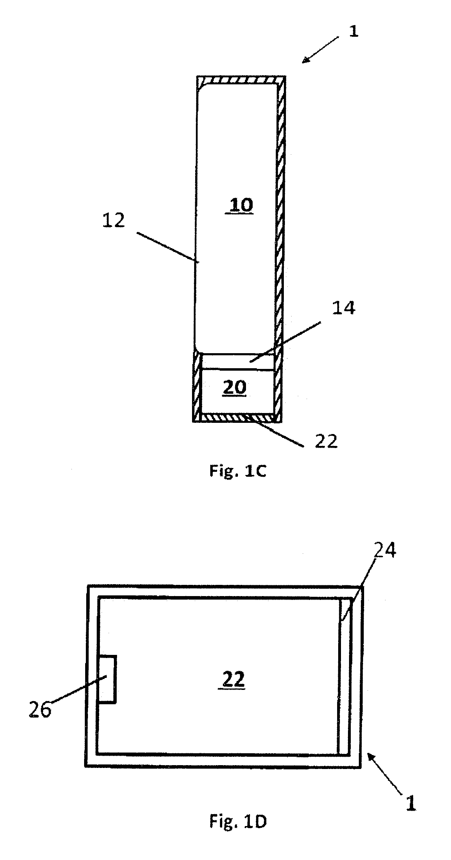

Figs. 1A to 1D show a casing device 1 formed according to a first embodiment. The casing device 1 can be configured in various ways for use with a portable electronic device 2, such as a mobile phone shown in Fig. 1A. For example, the casing device 1 can be mounted onto the portable electronic device 2 in various manners. In the example shown in Fig. 1A, the casing device 1 can be formed to fit around and secured to at least part of the peripheral sidewalls of the portable electronic device 2. The casing device 1 can have an opening 12 to allow access to the front side of the portable electronic device 2 for data entry and display.

As Figs. 1B and 1C show, the casing device 1 can be formed to have a first device compartment 10 for removably receiving and supporting the portable electronic device 2. In one example, the casing device 1 can be made of a flexible stretchable material (e.g., a silicone rubber material) so that the casing device 1 can be slightly stretched when being fitted onto the portable electronic device 2. For example, the casing device 1 can be made of any of various materials, including but not limited to, plastic, silicone, rubber, leather, or fabric materials. In an alterative example where the casing device 1 can be made of a non-stretchable material, the casing device 1 can be formed with any of various structures to allow the casing device 1 to open at a first position for receiving a portable electronic device 2 and close at a second position to fit around the portable electronic device 2. The casing device 1 can be formed in various other forms to removably receive and/or support the portable electronic device 2, as will be described in the following embodiments.

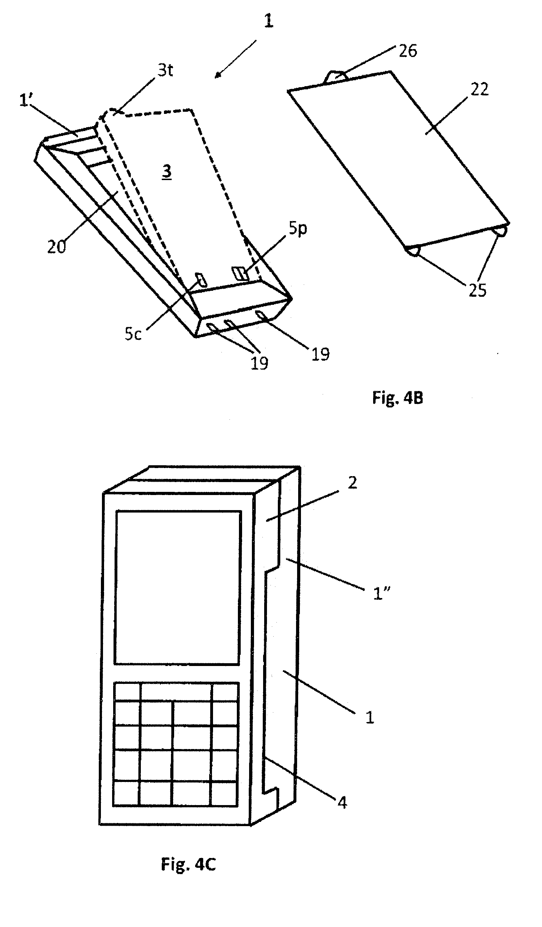

The casing device 1 can also have a second accessory compartment 20 for removably receiving and supporting a peripheral device 3. The second accessory compartment 20 of the casing device 1 can be at least partially enclosed by the casing device 1 to hold the peripheral device 3 in place and/or to partially conceal the peripheral device 3. For example, the second accessory compartment 20 can be partially enclosed by a covering member 22, which can open to allow access to the second accessory compartment 20 and/or the peripheral device 3 contained therein. In the example of Fig. 1B, the covering member 22 can be joined to the remaining portion of the casing device 1 through a hinge connection 24. Various locking mechanism 25 (see Fig. 4B) can be employed to retain the covering member 22 in a closed position, if desired. The covering member 22 can be in various other forms as described in the following embodiments.

Additionally or alternatively, the covering member 22 can be formed with any of various opening mechanism 26 to assist the user in opening the covering member 22 to access the second accessory compartment 20 and/or the peripheral device 3 contained therein. Exemplary opening mechanism 26 can include, but are not limited to, handles, tabs, dents, and openings formed on the covering member 22. Fig. 1B shows an opening or cutout 26 formed in the covering member 22 to assist the user in opening the cover member 22.

The second accessory compartment 20 in the casing device 1 can be formed at any of various locations in the casing device 1. For example, the second accessory compartment 20 communicates with the first device compartment 10. In one example, the second accessory compartment 20 can be positioned so that it opens to the contact port of the portable electronic device 2 at its lower end, after the casing device 1 is mounted onto the portable electronic device 2. The casing device 1 so formed can allow the peripheral device 3 to directly electrically connect with the portable electronic device 2, as will be described in the following embodiments. The second accessory compartment 20 can be formed at other positions on the casing device 1 as will be described in the following embodiments.

In the example shown in Fig. 1B, the first device compartment 10 and the second accessory compartment 20 can be partially separated from each other by one or more retainers 14. Such retainers 14 can help to retain the portable electronic device 1 inside the first device compartment 10, without shifting into the second accessory compartment 20. Additionally or alternatively, the retainers 14 can help to retain the peripheral device 3 inside the second accessory compartment 20, without shifting into the first device compartment 10. As Fig. 1B shows, the retainers 14 extend from the respect sidewalls of the casing device 1 and are spaced apart from each other in the middle portion of the casing device 1, allowing the electrical port on the peripheral device 3 to pass therethrough and electrically contact the portable electronic device 2.

The operation of the casing device 1 will now be described in connection with an external rechargeable battery as an example of the peripheral device 3.

The casing device 1 can be mounted onto a portable electronic device 2 and used as a protective case. For example, the casing device 1 can be slightly deformed, stretched, or otherwise manipulated to allow the portable electronic device 2 enter into the first device compartment 10 in the casing device 1. In one example where the casing device 1 is made of a flexible stretchable material, the portable electronic device 2 can be made to enter into the first device compartment 10 from the front opening 12 of the casing device 1. During such mounting process, the casing device 1 can be slightly deformed or stretched to receive the portable electronic device 2 inside the first device compartment 10 of the casing device 1.

In another example where the casing device 1 is made of a non-stretchable material, the casing device 1, the casing device 1 is configured so that the first device compartment 10 can at least partially open to allow entry of the portable electronic device 2. For example, the covering member 22 can be removed and separated from the remaining casing device 1 to expose the first and second accessory compartment 10, 20, so that the portable electronic device 2 can be inserted into the first accessory compartment 10 of the casing device 1 from the opening enclosed by the covering member 22. In an example where the casing device 1 is formed without the retainers 14 shown in Fig. 1B, the user can open the covering member 22 and slide the portable electronic device 2 into the first device compartment 10 in the casing device 1. One skilled in the art will appreciate that the casing device 1 can be formed in various other ways to receive and support a portable electronic device 2.

The casing device 1 can also attach a peripheral device 3 to the portable electronic device 2. For example, the peripheral device 3 can be fitted inside the second accessory compartment 20 of the casing device 1. For example, the covering member 22 can be removed and separated from the remaining casing device 1 to expose the second accessory compartment 20, so that the peripheral device 3 can be inserted into the second accessory compartment 20 in the casing device 1 from the opening enclosed by the covering member 22. The covering member 22 can then be closed to enclose the peripheral device 3 inside the second accessory compartment 20 of the casing device 1. The casing device 1 thus secures the peripheral device 3 in position, thereby preventing the peripheral device 3 from being detached from the portable electronic device 2 by accident. The peripheral device 3 can be connected with the casing device 1 in various other ways as described in the following embodiments.

The peripheral device 3 can be electrically connected with the contact port on the portable electronic device 2 in any of various manners, to thereby supply power to and/or transfer data to and from the portable electronic device 2. For example, the peripheral device 3 can be electrically connected with the contact port on the portable electronic device 2 directly, as is shown in Fig. 1B. In one example, the peripheral device 3 can be electrically connected with the portable electronic device 2 after the peripheral device 3 is placed in the accessory compartment 20 in the casing device 1. In another example, the peripheral device rechargeable battery 3 can be electrically connected with the portable electronic device 2 before being mounted with the casing device 1. For example, the combination of the portable electronic device 2 and the peripheral device 3 can be inserted into the first and second compartments 10; 20 from the opening sealed by the covering member 22. The covering member 22 can then be closed to retain the portable electronic device 2 and the peripheral device 3 in position inside the casing device 1. The peripheral device 3 can be electrically connected with the portable electronic device 2 in various other ways as described in the following embodiments.

Once the peripheral device 3 is electrically connected with the portable electronic device 2, the peripheral device 3 can operate to supply power to and/or transfer data to and from the portable electronic device 2. In one example, the peripheral device 3 can be in the form of a rechargeable battery external to the portable electronic device 2. In such an example, the rechargeable battery 3 is capable of supplying power to the portable electronic device 2, thereby extending the battery use time of the portable electronic device 2. For example, the output port of the rechargeable battery 3 electrically connects with the contact port of the portable electronic device 2 inside the casing device 1. In another example, the peripheral device 3 can be in the form of an optical scanner, which is electrically connected with the portable electronic device 2 to input scanned data into the portable electronic device 2.

The peripheral device 3 is removably attached to the portable electronic device 2 and can be separated therefrom as desired. For example, the peripheral device 3 can be in the form of a rechargeable battery external to the portable electronic device 2. When the rechargeable battery 3 is used up and needs to be replaced, the user can detach the rechargeable battery 3 from the portable electronic device 2. For example, the covering member 22 can be opened or removed from the remaining casing device 1 to allow access to the rechargeable battery 3. In one example, the user can employ the opening mechanism 26 when opening the covering member 22. The user can then reach in the second accessory compartment 20 and pull out the rechargeable battery 3. As Fig. 1B shows, the second accessory compartment 20 in the casing device 1 is formed with extra room to allow the user to access the rechargeable battery 3 and detach the same from the portable electronic device 2.

During the removal process of the rechargeable battery 3, the casing device 1 remains on the portable electronic device 2. In other words, the rechargeable battery 3 can be detached from the portable electronic device 2 without having to first remove the casing device 1. After the rechargeable battery 3 is removed from the portable electronic device 2, the user can continue to operate the portable electronic device 2 using the power supplied by the internal battery of the portable electronic device 2. Accordingly, the detachment of the rechargeable battery 3 will not interrupt the operation of the portable electronic device 2. In another example, an additional charged battery can be used with the portable electronic device 2 to supply power thereto, after the detached rechargeable battery 3 is detached from the casing device 1 and subjected to the battery charging operation. The detached rechargeable battery 3 can then be subjected to a battery charging operation. After the detached rechargeable battery 3 is charged, it can be applied to and connected with the portable electronic device 2 again, in a similar manner described above.

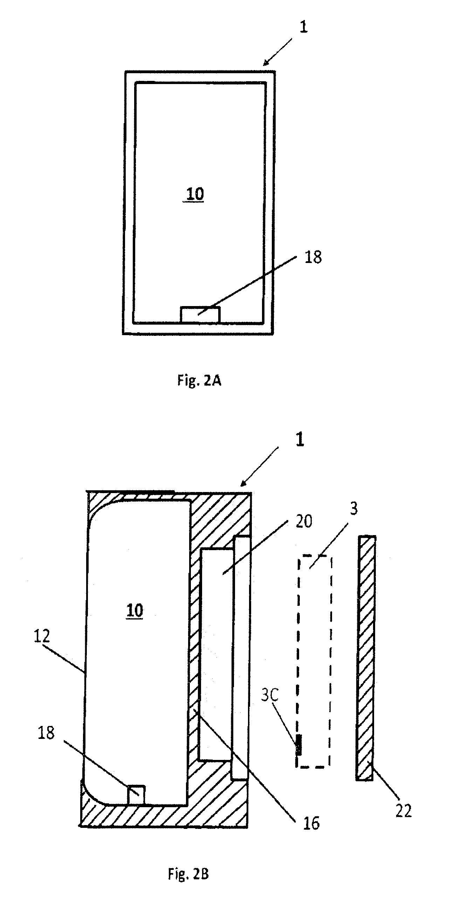

Figs. 2A to 2C show a casing device 1 formed according to a second embodiment. In this embodiment, the second accessory compartment 20 in the casing device 1 is formed on the rear wall 16 of the casing device 1 facing away from the first device compartment 10. The second accessory compartment 20 is configured to receive and support a peripheral device 3, such as a rechargeable battery, an optical scanner, a voice recorder, or a credit card reader. In the example shown in Fig. 2B, the second accessory compartment 20 of the casing device 1 is separated from the first device compartment 10 by a reduced wall section 16c of the casing device 1. The second accessory compartment 20 and the casing device 1 can be configured in other forms as will be described in the following embodiments.

Optionally, a covering member 22 can be used to enclose and secure the peripheral device 3 Inside the second accessory compartment 20 of the casing device 1. In one example, the covering member 22 can be locked in the second accessory compartment 20. Additional opening mechanism 26 can be provided to assist the user in opening the covering member 22 to access the second accessory compartment 20 and/or the peripheral device 3 contained therein, as is described above.

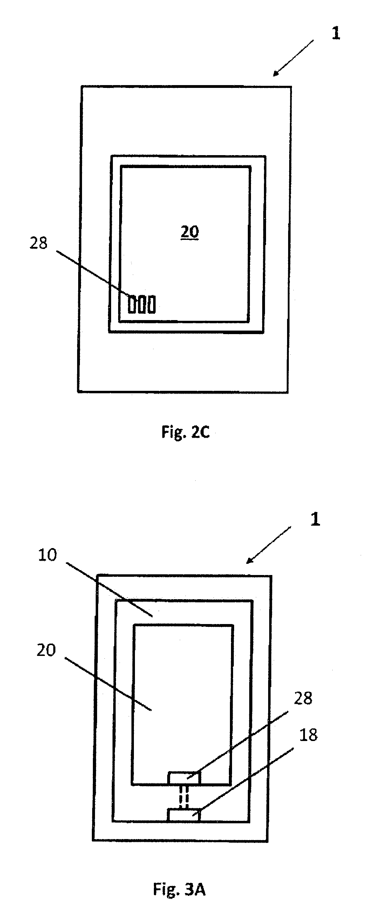

The casing device 1 is configured to electrically connect the peripheral device 3 with the portable electronic device 2. In one example, the first and second compartments 10, 20 of the casing device 1 are formed with respective first and second contact ports 18, 28, which are electrically connected with each other (see Fig. 3A). The first contact port 18 on the first device compartment 10 is configured for electrically connecting with the contact port on the portable electronic device 2. For example, the first contact port 18 can be in the form of a USB port, such as a male type USB port complementary to the female type USB port on the portable electronic device 2. Various other types of contact ports can also be used to electrically connecting the casing device 1 with the portable electronic device 2.

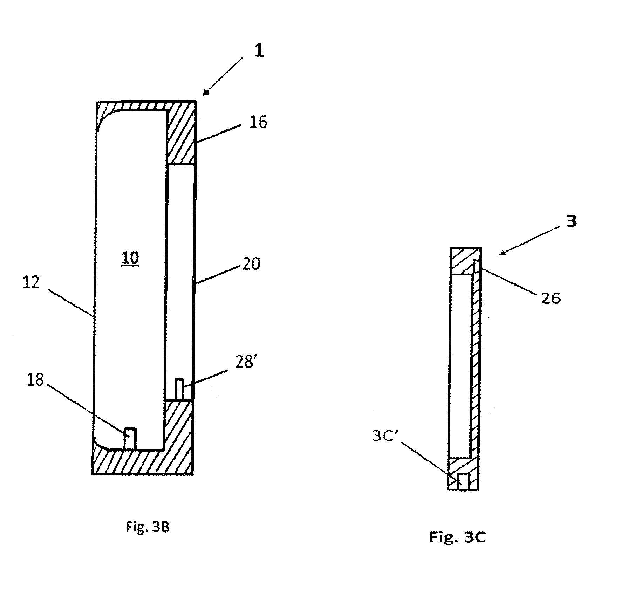

Additionally or alternatively, the second contact port 28 on the second accessory compartment 20 is configured for electrically contacting with the contact port 3c on the peripheral device 3. In one example, the second contact port 28 on the casing device 1 can be in the form of contact pins, as is shown in Fig. 2C, for electrically connecting with complementary contact pins 3c on the peripheral device 3. In another example, the second contact port 28 can be in the form of a USB port, such as a male type USB port complementary to the female type USB port 3c on the peripheral device 3 (see, also, Figs. 3B and 3C). Various other types of contact ports can also be used to electrically connecting the casing device 1 with the peripheral device 3.

When the casing device 1 is mounted on a portable electronic device 2, the first contact port 18 of the casing device 1 is electrically connected with the contact port on the portable electronic device 2. When the peripheral device 3 is placed inside the second accessory compartment 20 of the casing device 1, the second contact port 28 on the casing device 1 is electrically connected with the contact port 3c on the peripheral device 3. As such, the peripheral device 3 can be electrically connected with the portable electronic device 2 to supply power to and/or transfer data to or from the portable electronic device 2 received in the first device compartment 10. In one example, the peripheral device 3 is in the form of an external rechargeable battery and thus functions as a back-up to the internal battery of the portable electronic device 2.

To remove the peripheral device 3, the user can open and/or remove the covering member 22 to access the peripheral device 3 contained in the second accessory compartment 20 of the casing device 1. The peripheral device 3 can thus be detached from the casing device 1 without the need of removing the casing device 1 from the portable electronic device 2. Similarly, a peripheral device 3 can be inserted in the second accessory compartment 20 of the casing device 1 without the need of removing the casing device 1 from the portable electronic device 2. As such, the casing device 1, after being attached to the portable electronic device 2, allows the portable electronic device 2 to be used with various peripheral devices 3 and can thus expand the functionality of the portable electronic device 2.

Figs. 3A and 3B show a casing device 1 formed according to a third embodiment. In this embodiment, the second accessory compartment 20 of the casing device 1 is formed in the rear wall 16 of the casing device 1 and communicates with the first device compartment 10 of the casing device 1. As is best shown in Fig. 3B, such second accessory compartment 20 is defined by the thickness of the rear wall 16 of the casing device 1 and configured to receive and support a peripheral device 3 of any of various types described above. In the example shown in Fig. 3B, the second contact port 28' formed in the second accessory compartment 20 is in the form of a USB port, such as a male type USB port complementary to the female type USB port 3c' formed on the peripheral device 3. Various other types of contact ports can also be used to electrically connecting the casing device 1 with the peripheral device 3.

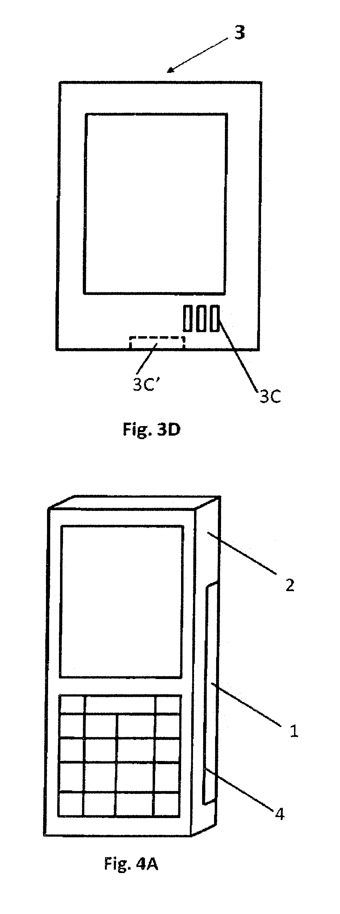

Figs. 3C and 3D show a peripheral device 3 adapted for use in the casing device 1 shown in Figs. 3A and 3B. For example, the peripheral device 3 is configured to be securely received in and supported by the second accessory compartment 20 in the casing device 1. The peripheral device 3 can be formed with a female type USB port 3c' for electrically connecting with the complementary male type USB port 28' in the casing device 1. In a preferred example, the peripheral device 3 can be in the form of a rechargeable battery. As is best shown in Fig. 3D, such rechargeable battery 3 can be additionally or alternatively provided with contact pins 3c for use in a different casing device 1 shown in Fig. 2C or in Fig. 4B as will be described in great detail in the following embodiments.

Similar to that described in the above embodiments, the peripheral device 3 can be inserted into or removed from the second accessory compartment 20 of the casing device 1 without the need of removing the casing device 1 from the portable electronic device 2.

Figs. 4A and 4B show a casing device 1 formed according to a fourth embodiment. In this embodiment, the casing device 1 is configured so that it can be removably fitted inside a battery chamber 4 formed in the portable electronic device 2, as is shown in Fig. 4A. In one example, a part of the casing device 1 can be formed similarly to the internal battery of the portable electronic device 2. For example, the casing device 1 can have a body portion 1' resembling the shape and size of the part of the internal battery received inside the battery chamber 4 of the portable electronic device 2. In a varied example shown in Fig. 4C, the casing device 1 can be formed to have an extended portion 1" to accommodate a larger peripheral device 3, such as an optical scanner couple with a rechargeable battery.

The casing device 1 can be formed with any of various locking mechanism 19 to secure the body portion 1' of the casing device 1 inside the battery chamber 4 of the portable electronic device 2 during the normal use of the casing device 1 and the portable electronic device 2. For example, the body portion 1' of the casing device 1 can be provided with a similar locking mechanism that is formed on the internal battery of the portable electronic device 2 for securing the internal battery inside the battery chamber 4 of the portable electronic device 2. in the example shown in Fig. 4B, the body portion 1' of the casing device 1 can include one or more locking slots 19 for engaging complementary protrusions formed on the casing device 1 in the battery chamber 4. Various other types of locking mechanism 19 can also be used to secure the body portion 1' of the casing device 1 inside the battery chamber 4 of the portable electronic device 2.

The casing device 1 can be formed to have an accessory compartment 20 for receiving and supporting a peripheral device 3. In one example, the peripheral device 3 can be removably fit inside the accessory compartment 20 of the casing device 1. As is shown in Fig. 4B, the peripheral device 3 can be formed with a mounting tab 3t to assist the user in removing the peripheral device 3 from the accessory compartment 20 in the casing device 1.

Optionally, the casing device 1 can have a removable covering member 22 provided to secure and/or conceal the peripheral device 3 inside the accessory compartment 20 of the casing device 1 as is shown in Fig. 4B. In the alternative, removable covering member 22 can be adapted to secure and/or conceal the casing device 1 inside the battery chamber 4 of the portable electronic device 2. The covering member 22 can allow the user to access the peripheral device 3 while the body portion 1' of the casing device 1 remains in position in the battery chamber 4 of the portable electronic device 2. In one example, the removable covering member 22 can be formed with one or more locking tabs 25 for engaging with complementary locking slots formed in the battery chamber 4 of the portable electronic device 2 to retain the covering member 22 in a closed position. In another example, the covering member 22 can be formed with an opening tab 26 to assist the user in opening the covering member 22 as is described in the above embodiments.

The casing device 1 can be formed with electrically connected contact ports, similar to the contact ports 18, 28, 28' described above, for electrically connecting with the portable electronic device 2 and the peripheral device 3, respectively, for power supply and/or data transfer operation. For example, the contact ports on the casing device 1 can be in the form of contact pins, USB type ports, and other contact ports. In one example, the casing device 1 can be formed with a first contact port, similarly to the contact port formed on the internal battery of the portable electronic device 2, for electrically connecting with the contact port of the portable electronic device 2. In another example, the casing device 1 can be formed with a second contact port for electrically connecting with a peripheral device 3, such as a rechargeable battery, received in the accessory compartment 20 of the casing device 1,

In a preferred embodiment, the peripheral device 3 can be formed as a rechargeable battery, For example, the peripheral device 3 can be a lithium type rechargeable battery. In one example, the rechargeable battery 3 can include a voltage control circuit to adjust the output voltage of the rechargeable battery 3 to adapt to the proper working condition of a portable electronic device 2. The voltage control circuit can be configured in various forms to carry out the voltage adjustment operation.

Additional control circuits can be selectively formed in the rechargeable battery 3 for monitoring the internal temperature and the battery power of the rechargeable battery 3 and for displaying the measured condition and status of the rechargeable battery 3 by using indicators 5c, 5p. In one example, a temperature control circuit is provided monitor the internal temperature of the rechargeable battery 3. The temperature control circuit can include one or more indicators 5c reflecting the temperature condition inside the rechargeable battery 3. For example, the temperature condition indicator 5c on the rechargeable battery 3 can be lit once the internal temperature of the rechargeable battery 3 exceeds a predetermined safety level. In another example, a battery power monitoring circuit can be provided to measure the level of battery power remaining in the rechargeable battery 3. The battery power monitoring circuit can include one or more indicators 5p to reflect the status of remaining battery power. In the above examples where indicators 5c, 5p are formed on the rechargeable battery 3, the covering member 22 of the casing device 1 can be formed with openings to reveal such indicators 5c, 5p on the rechargeable battery 3. Various other control circuits can also be included in the rechargeable battery 3 to optimize its performance.

Additionally or alternatively, the casing device 1 can be formed with any of various control circuits, including a voltage control circuit, a temperature control circuit, a battery power monitoring circuit, and other control circuits, which can be similar to those described above. For example, the casing device 1 can include one or more indicators, similar to the indicators 5c, 5p described above, to reflect the measured condition and status of the rechargeable battery 3. In one example, the temperature control circuit in the casing device 1 can be used to monitor the internal temperature of the rechargeable battery 3, when the casing device 1 is subjected to a battery charging operation with the rechargeable battery 3 remaining inside the accessory compartment 20 in the casing device 1. A temperature control indicator can be employed on the casing device 1 and lit when the internal temperature of the rechargeable battery 3 exceeds a predetermined safety level.

When the casing device 1 is used with a portable electronic device 2, the casing device 1 is mounted in the battery chamber 4 of the portable electronic device 2. A peripheral device 3 of any of various types described above can be placed in the accessory compartment 20 of the casing device 1. The peripheral device 3 can supply power to and/or transfer data to and from the portable electronic device 2. In the example where the peripheral device 3 is formed as a rechargeable battery, the casing device 1, together with the rechargeable battery 3, can replace the internal battery of the portable electronic device 2 and supply power thereto. In another example, where the peripheral device 3 is formed to include an optical scanner, the peripheral device 3 can expand the functionality of the portable electronic device 2.

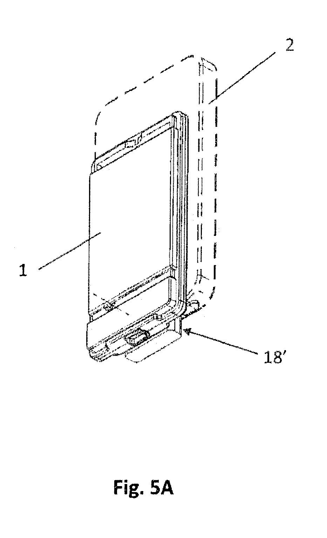

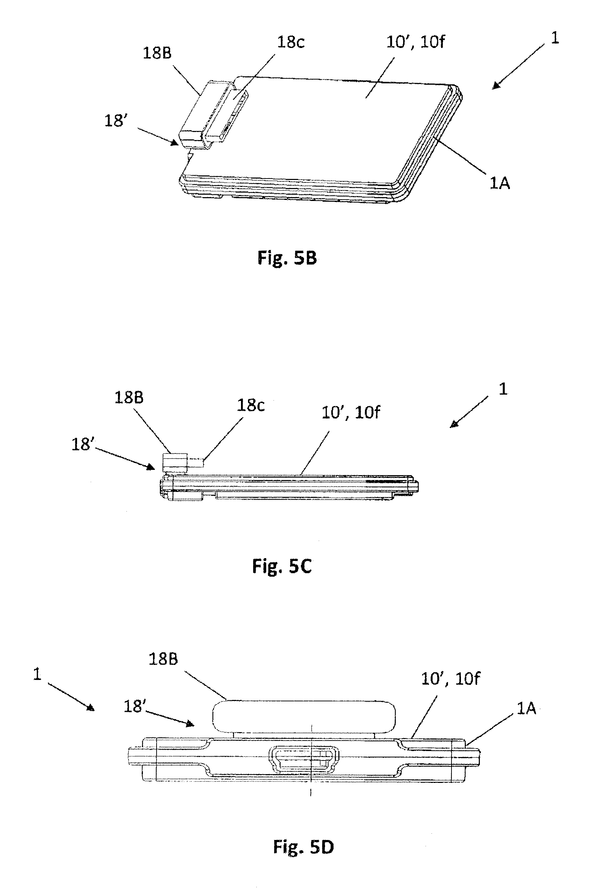

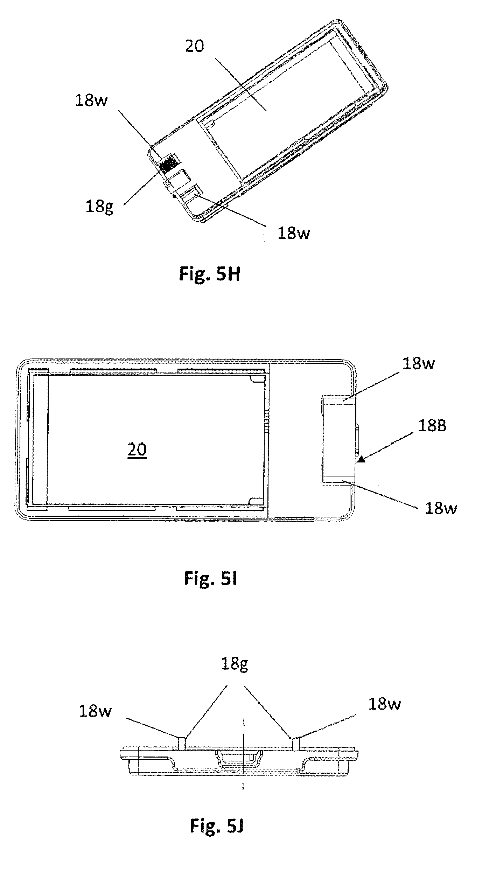

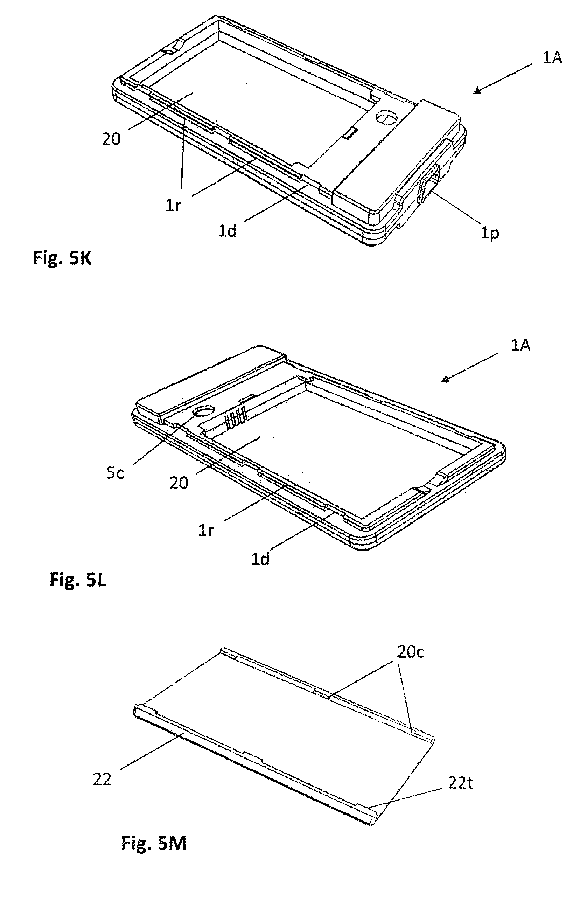

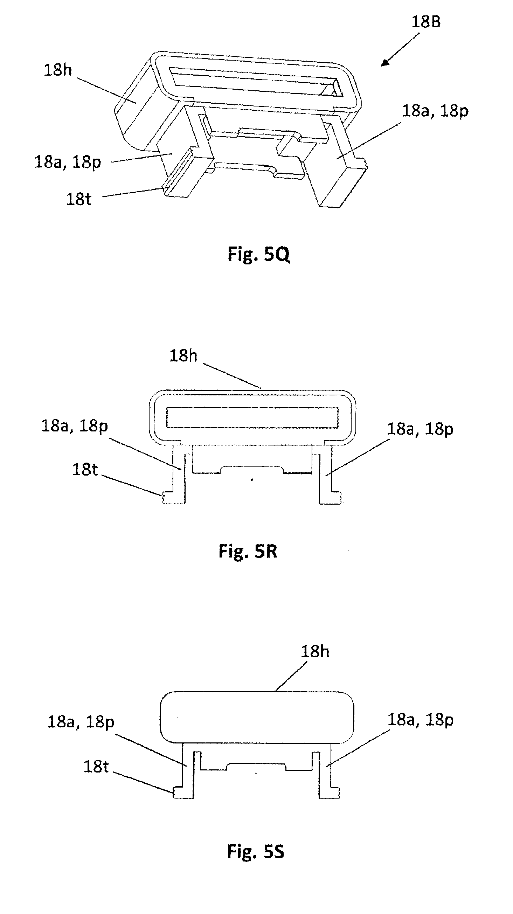

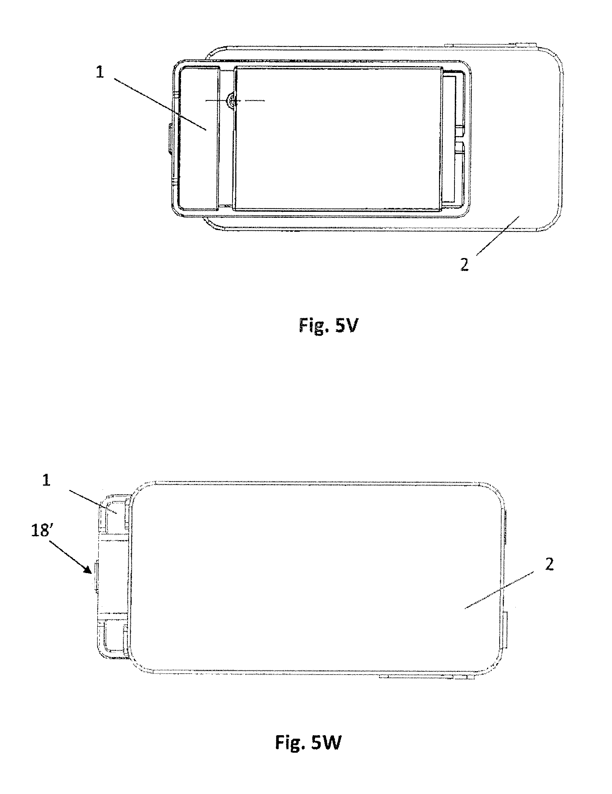

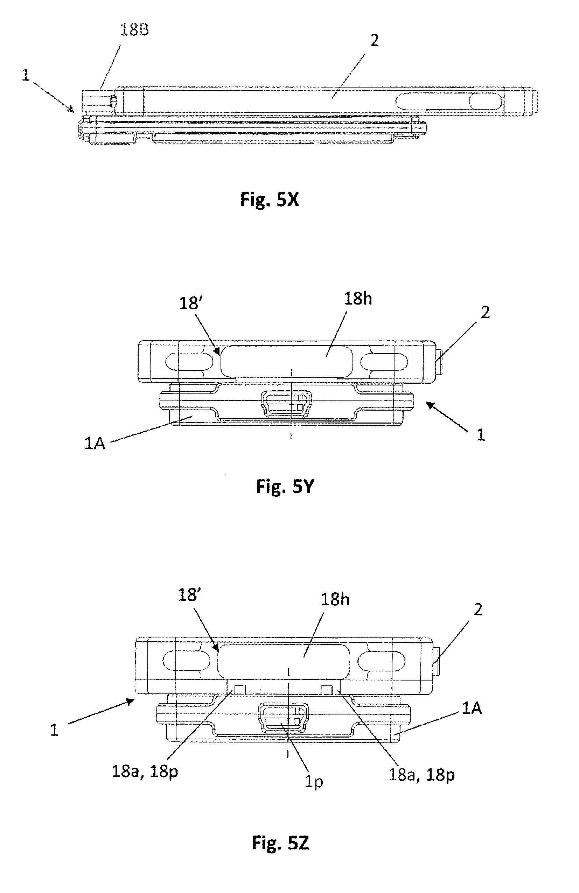

Figs. 5A to 5Z show a casing device 1 formed according to a fifth embodiment. In the examples of Figs. 5A to 5E, the casing device 1 can be configured to have a main body 1A for supporting and connecting with a portable electronic device 2 and a peripheral device 3, as is shown in Figs. 5V to 5Z. Additionally or alternatively, the casing device 1 is formed with an adjustable contact port 18' for electrically connecting with a contact port on the portable electronic device 2, as is shown in Figs. 5A to 5E. The configuration and operation of the main body 1A and the adjustable contact portion 18' of the casing device 1 will be described in greater details below.

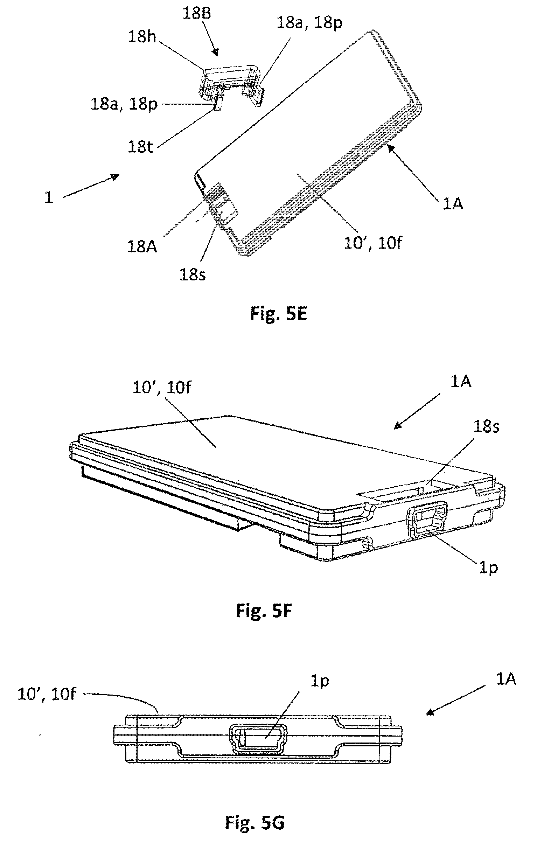

Figs. 5F to 5P illustrate the configuration of and components forming the main body 1A of the casing device 1. In one example shown in Figs. 5F and 5G, the main body 1A of the casing device 1 has a device support 10' for supporting the portable electronic device 2 during the normal use of the casing device 1. For example, the casing device 1 is configured so that the portable electronic device 2 is in contact with and supported by the front wall 10f of the casing device 1. The device support 10' of the casing device 1 can also be formed as a device compartment 10 for receiving a portable electronic device 2, as is described in the various examples herein.

in another example shown in Figs. 5H to 5J, the main body 1A of the casing device 1 is formed with an accessory compartment 20 for receiving and containing a peripheral device 3. The accessory compartment 20 is normally enclosed by the front wall 10f of the casing device 1, but removed in Figs. 5H to 5J to show the accessory compartment 20. In a preferred embodiment, the casing device 1 is formed so that the accessory compartment 20 is accessible from the rear side of the casing device 1. When the casing device 1 is used with a portable electronic device 2, as is shown in Fig. 5A, the user can access the accessory compartment 20 and/or reach the peripheral device 3 contained therein without having to remove the casing device 1 from the portable electronic device 2. In one example where the peripheral device 3 is formed as a rechargeable battery, the user can reach inside the accessory compartment 20 of the casing device 1 to change the rechargeable battery 3.

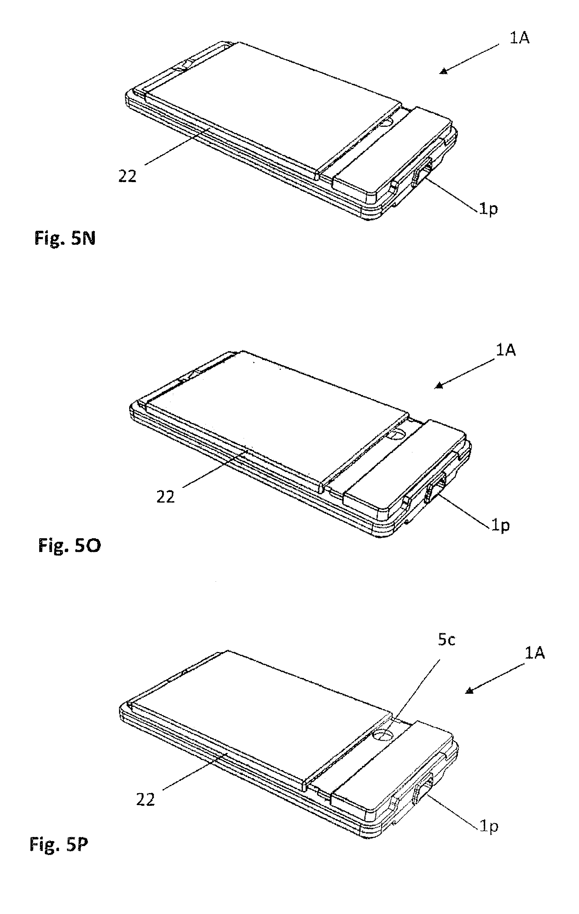

In the examples shown in Figs. 5K to 5M, a covering member 22 can be provided to enclose the accessory compartment 20 formed in the main body 1A of the casing device 1. The covering member 22 can be attached to the main body 1A of the casing device 1 through various connecting mechanism. For example, the main body 1A of the casing device 1 is formed with a rail-like structure 1r to engage with a channel-like structure 20c on the covering member 22, thereby allowing the covering member 22 to slide open or close the accessory compartment 20 in the casing device 1. In a preferred example, the rail-like structure 1r is discontinued at one or more areas 1d, allowing corresponding tab-like structures 22t on the covering member 22 to enter such discontinued areas 1d and close the accessory compartment 20, as is shown in Fig. 5N. The covering member 22 can then slide along the rail-like structure 1r on the main body 1A of the casing device 1. In an example shown in Fig. 5O, the covering member 22 slides away from external contact port 1p on the main body 1A, to gradually expose the battery indicator 5c formed on the main body 1A of the casing device 1. Fig. 5P shows the covering member 22 at a locked position where the battery indicator 5c is revealed from under the covering member 22.

In the examples shown in Figs. 5A to 5E and Figs. 5Y and 5Z, the casing device 1 is formed with an adjustable contact port 18', which can be movably connected with the main body 1A of the casing device 1 and adjusted to adapt the casing device 1 for use with various portable electronic devices 2. For example, at least part of the adjustable contact port 18' can be pulled away from and/or pressed into a receiving slot 18s formed in the main body 1A of the casing device 1, while remaining in the receiving slot 18s. Additionally or alternatively, at least part of the adjustable contact port 18' can be removably connected with the remainder of the casing device 1 and be separated therefrom, as is shown in Figs. 5B and 5E. In one embodiment, different adjustable contact ports 18' can be used with the same main body 1A of the casing device 1 so that the casing device 1 can be used with portable electronic devices 2 with different contact ports.

The adjustable contact port 18' of the casing device 1 can be configured in various ways to achieve the above-mentioned purpose. In the examples shown in Figs. 5B to 5J, the main body 1A of the casing device 1 is also formed with a first portion of the adjustable contact port 18'. As is best shown in Fig. 5I, the adjustable contact port 18' can include a first portion 18A retained in the main body 1A of the casing device 1 for adjustably connecting with a second movable portion 18B of adjustable contact port 18', as will be discussed in further details below. The first portion 18A of adjustable contact port 18' can have a U-shape defined by parallel opposite walls 18w. In one example, at least one of the parallel opposite walls 18w of the first portion 18A can be formed with grooves 18g facing toward the other opposite wall 18w for engaging with a hooked tip 18t on the second movable portion 18B. The first portion 18A of the adjustable contact port 18' can be separately formed from the main body 1A of the casing device 1 and retained thereto by any of various known methods.

In one example as is shown Figs. 5Q to 5S, the adjustable contact port 18' can comprise a second movable portion 18B configured to be movably connected with the remainder of the casing device 1. The second movable portion 18B of the adjustable contact port 18' can include a head portion 18h, on which a device contact 18c is formed for electrically contacting a device contact portion on the portable electronic device 2. The second movable portion 18B of the adjustable contact port 18' can also include an adjusting portion 18a. The adjusting portion 18a of the second movable portion 18B is configured to be snuggly received in a receiving slot 18s formed in the main body of the casing device 1, to thereby attach and connect the second movable portion 18B to the main body 1A of the casing device 2. When the adjusting portion 18a of the second movable portion 18B is attached to the main body 1A of the casing device 2 as is shown in Figs. 5B to 5D, the device contact 18c of the second movable portion 18B can be electrically connected to a contact port of a portable electronic device 2 supported on the device support 10' of the casing device 1, as is shown in Fig. 5A.

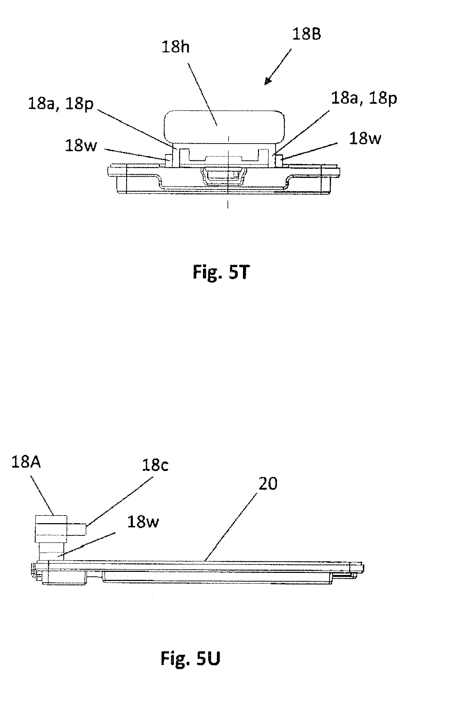

Additionally or alternatively, the adjusting portion 18a of the second movable portion 188 is configured to move into and/or away from the receiving slot 18s formed in the main body 1A of the casing device 1, while maintaining the attachment and connection between the second movable portion 18B and the main body of the casing device 2. For example, the adjusting portion 18a of the second movable portion 188 can be configured to be in proper friction engagement with the opposite walls 18w forming the receiving slot 18s in the main body 1A of the casing device 1, as is shown in Figs. 5T and 5U. The friction engagement can allow a relative sliding movement between the adjusting portion 18a and the opposite walls 18w of the receiving slot 10 in a direction substantially perpendicular to the device support 10' of the casing device 1. The second movable portion 18B so formed can be pressed into and/or pulled away from the receiving slot 18s in the casing device 1 during the normal use of the casing device 1.

In another example best shown in Figs. 5Q to 5S, the adjusting portion 18a of the second movable portion 18B can be formed as connecting prongs 18p extending from the head portion 18h of the second movable portion 18B. The connecting prongs 18p can be oriented so that, when they are received in the receiving slot 18s in the main body 1A during the normal use of the casing device 1, the device contact 18c on the second movable portion 18B can properly connect with the contact portion of a portable electronic device 2 supported on the device support 10' of the casing device 1 as is shown in Fig. 5A.

The connecting prongs 18p of the second movable portion 18B can be formed in various ways to facilitate the movable connection between the second movable portion 18B and the remainder of the casing device 1. In one example, the connecting prongs 18p are configured so that they can flex in opposite directions against the opposite walls 18w of the receiving slot 3, after the second movable portion 18B is inserted into the receiving slot 18s in the main body 1A of the casing device 1. For example, the connecting prongs 18p of the second movable portion 18B can be formed of a material, such as metal or plastics, to allow the connecting prongs 18p to be bent toward each other before insertion into the receiving slot 18s in the main body 1A of the casing device 1. After the bent connecting prongs 18p are inserted in the receiving slot 18s, the connecting prongs 18p tend to spring back to their original shape and thus bias against the opposite walls 18w of the receiving slot 18s in the main body of the casing device 1, to thereby secure the second movable portion 18B inside the receiving slot 18s in the main body 1 A of the casing device 1.

In one example best shown in Figs. 5Q to 5S, the connecting prongs 18p of the second movable portion 18B can be formed with hooked tips 18t pointing away from each other. Such hooked tips 18t on the connecting prongs 18p can be configured to engage with the grooves 18g formed on the opposite walls 18w of the receiving slot 18s. As the hooked tips 18t on the connecting prongs 18p move from one groove 18g to the next, the second movable portion 18B moves toward or away from the main body 1A of the casing device 1 in steps. In one example, the grooves 18g on the opposite walls 18w are determined so that the casing device 1 can be used with various portable electronic devices 2 of different thickness, as is shown in Figs, 5V to 5Z.

The second movable portion 18B of the adjustable contact port 18' can be provided with electrical connection and circuit for electrically connecting the device contact 18c on the head portion 18h to the contact port 3c of a peripheral device 3 received in the second accessory compartment 20 of the casing device 1. In one example, such a peripheral device 3 is in the form of an external battery. Additional electrical connection and circuit can also be formed in the main body 1A of the casing device 1 for electrically connecting the second movable portion 18B with the contact port 3c of a peripheral device 3 received in the second accessory compartment 20 of the casing device 1. The various electrical connection and circuits formed in the second movable portion 18B and/or the casing device 1 are configured to charge the internal battery of the portable electronic device 2 and/or transfer data to/from the portable electronic device 2.

In a further example, the casing device 1 can be provided with an external contact port 1p for charging the external battery 3 and/or transferring data to/from a peripheral device 3 received in the second accessory compartment 20 of the casing device 1. Additionally or alternatively, the external contact port 1p of the casing device 1 can be configured to charge the internal battery of the portable electronic device 2 and/or transfer data to/from the portable electronic device 2 during the normal use of the casing device 1. In one example, the external contact port 1p of the casing device 1 can be various USB type contact ports, such as a mini USB port, as is shown in Figs. 5F and 5G.

As is shown in Figs. 5V to 5Z, when the casing device 1 is used with a portable electronic device 2, the second movable portion 18B of the adjustable contact port 18' can be connected with and adjusted in relation to the main body 1A of the casing device 1. For example, the second movable portion 18B can be pressed toward and/or pulled away from the main body 1A of the casing device 1 so that the electrical contact 18c on the second movable portion 18B can be spaced from the device support 10' on the casing device at various different distances, as are best shown in Figs. 5Y and 5Z. The casing device 1 can thus be used with portable electronic devices 2 of different thickness.

As one skilled in the art will appreciate, the distance between the device contact 18c of the second movable portion 18B and the device support 10' of the casing device 1 can be adjusted depending on the type and configuration of the portable electronic device 2 used with the casing device 1. For example, when the casing device 1 is used with a portable electronic device 2 having a lesser thickness, the second movable portion 18B can be pressed toward the main body 1A of the casing device 1. As a result, the device contact 18c of the second movable portion 18B moves toward the device support 10' of the casing device 1 to properly connect with the contact port on the portable electronic device 2 (see, e.g., Fig. 5Y). In another example where the casing device 1 is used with a portable electronic device 2 having a larger thickness, the second movable portion 18B can be pulled away from the main body 1A of the casing device 1 while the adjusting portion 18a of the second movable portion 18B is retained inside the receiving slot 18s In the casing device 1. In such a case, the device contact 18c of the second movable portion 18B is further spaced from the device support 10' of the casing device 1, so as to be properly connected with the contact port on the portable electronic device 2 (see Fig, 5Z). As such, the casing device 1 can accommodate portable electronic devices 2 of different sizes, such as different thicknesses.

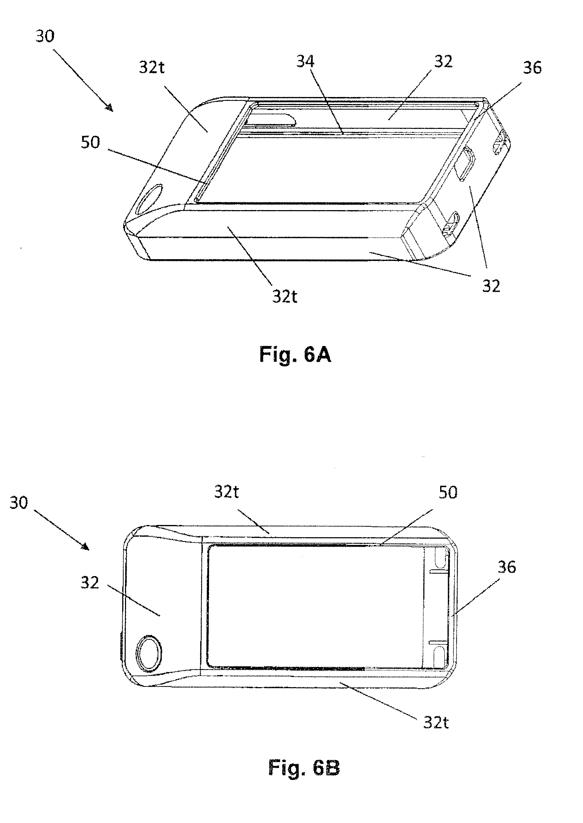

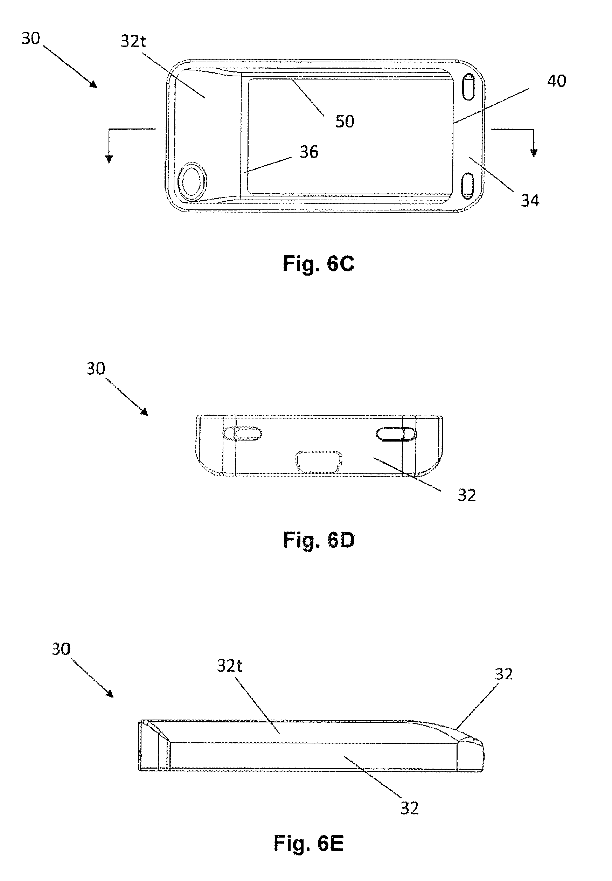

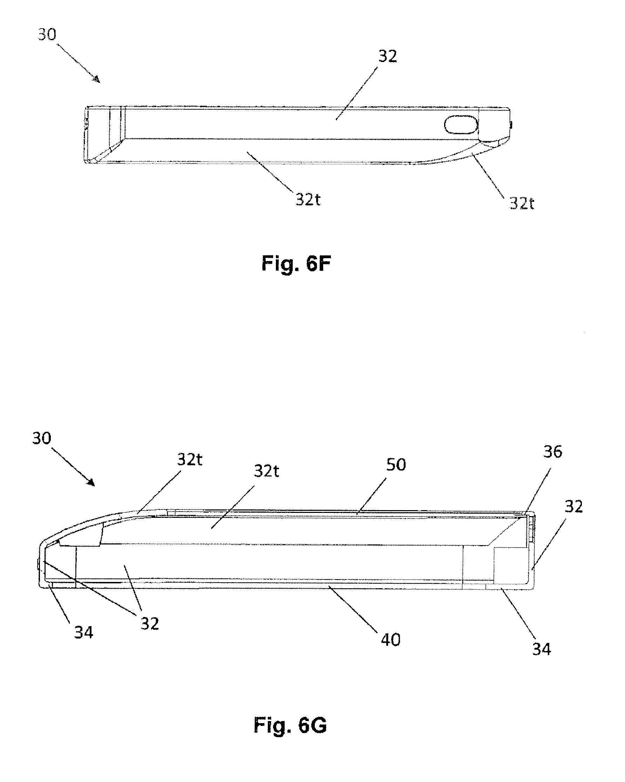

Figs. 6A to 6G show a cover jacket 30 according to another embodiment. The cover jacket 30 can be configured in various ways to secure the casing device 1 shown in Fig. 5B to a portable electronic device 2. For example, the cover jacket 30 can comprise a circumferential wall 32, which is configured to surround at least part of the circumferential walls of the casing device 1 and the portable electronic device 2 to attach such casing device 1 to the portable electronic device 2. In one example, the circumferential wall 32 of the cover jacket 30 can have a thickness similar to that of the portable electronic device 2 to be used with the cover jacket 30. In another example, the circumferential wall 32 can have a tapered portion 32t extending toward one of the casing device 1 and the portable electronic device 2 with a minor dimension. For example, the tapered portion 32t of the cover jacket 30 can be provided to accommodate a smaller casing device 1 shown in Fig. 5A.

In the various drawing figures, the cover jacket 30 is shown to have the shape of an endless sleeve. In one example, the circumferential wall 32 of the cover jacket 30 is formed to surround the entire circumferential walls of the casing device 1 and the portable electronic device 2. For example, the cover jacket 30 can be formed so that its circumferential wall 32 can snuggly fit around the combined casing device 1 and portable electronic device 2 shown in Fig. 5A. In such a case, the casing device 1 and the portable electronic device 2 can be retained in position inside the cover jacket 30 through frictional contact between the cover jacket 30 and the combined casing device 1 and portable electronic device 2.

In another example, the cover jacket 30 can have a U-shape, when viewed from the front side of the cover jacket 30, so as to surround partial circumferential walls of the casing devices 1 to a portable electronic device 2. For example, a U-shaped cover jacket 30 can be formed to snuggly fit onto the combination of a casing device 1 and a portable electronic device 2 shown in Fig. 5A. In one example, such a U-shaped cover jacket 30 can fit around the lower portion of the combined casing device 1 and portable electronic device 2.

Additionally or alternatively, the cover jacket 30 can comprise one or more curbing walls 34, 36 configured to hold the casing device 1 and the portable electronic device 2 together. In one example shown in Fig. 6A, a first curbing wall 34 can be formed on the front side of the cover jacket 30 and extend substantially perpendicular to the circumferential wall 32 of the cover jacket 30. After the cover jacket 30 fits onto the combined casing device 1 and portable electronic device 2, the first curbing wall 34 can rest on the front surface of the portable electronic device 2, thereby preventing the same from accidentally falling out of the cover jacket 30. As one skilled in the art will appreciate, the first curbing wall 34 can be formed without interfering with the display area of the portable electronic device 2.

In another example, a second curbing wall 36 can be formed on the rear side of the cover jacket 30 and extend substantially perpendicular to the circumferential wall 32 of the cover jacket 30. After the cover jacket 30 fits on the combined casing device 1 and portable electronic device 2, the second curbing wall 36 can rest on the casing device 1 to prevent the same from accidentally falling out of the cover jacket 30. In a preferred embodiment, the second curbing wall 36 cooperate with the first curbing wall 34 to retain the combined casing device 1 and portable electronic device 2 inside the cover jacket 30.

As is best shown in Figs. 6C and 6G, the cover jacket 30 has a device opening 40 formed on a front side of the cover jacket 30. The device opening 40 can be shaped and sized to expose a display area on a portable electronic device 2 after such portable electronic device 2 is fit inside the cover jacket 30. Optionally, the cover jacket 30 can have a secondary opening 50 formed on a rear side of the cover jacket 30, as is best shown in Figs. 6A, 6B, and 6G. Such secondary opening 50 in the cover jacket 30 allows a user to access the casing device 1 and/or the peripheral device 3 enclosed therein without removing the casing device 1 from the cover jacket 30. In one example, the casing device 1 encases a rechargeable battery 3 for use to charge the portable electronic device 2. In such a case, the secondary opening 50 in the cover jacket 30 allows a user to access the rechargeable battery 3. Additionally or alternatively, the secondary opening 50 in the cover jacket 30 can be advantageous in promoting heat dissipation during the normal operation of the portable electronic device 1 and/or the peripheral device 3, such as a rechargeable battery.

The cover jacket 30 can fit over the combination of a casing device 1 and a portable electronic device 2 and secure the casing device 1 and the portable electronic device 2 to each other. For example, the casing device 1 and the portable electronic device 2 can be assembled together to form a unit, as is shown in Figs. 5V to 5Z. The combined casing device 1 and portable electronic device 2 can then be introduced into the cover jacket 30 and be secured to each other by the cover jacket 30. For example, the casing device 1 of the combined casing device 1 and portable electronic device 2 can be introduced into the cover jacket 30 from the device opening 40 on the front side of the cover jacket 30. The portable electronic device 2 can follow the casing device 1 to enter into the cover jacket 30. In one example, the cover jacket 30 can be slightly deformed to allow the portable electronic device 2 to be pressed into the cover jacket 30. When the cover jacket 30 is formed of an elastic material, the cover jacket 30 can be stretched to expand the device opening 40, so that the portable electronic device 2 can pass the device opening 40 and be fit inside the cover jacket 30.

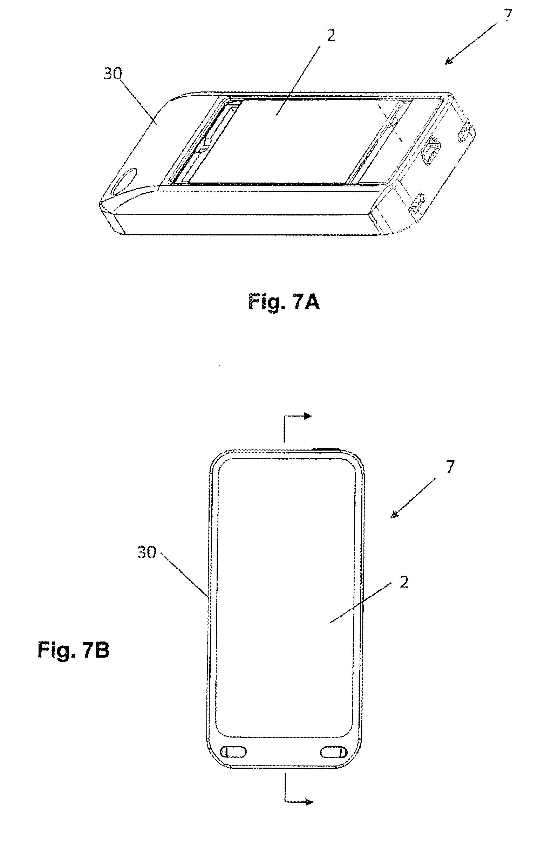

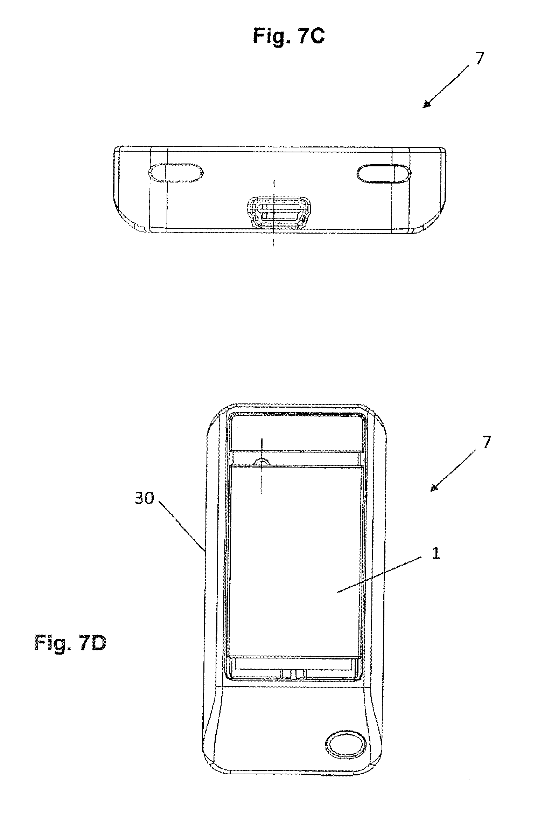

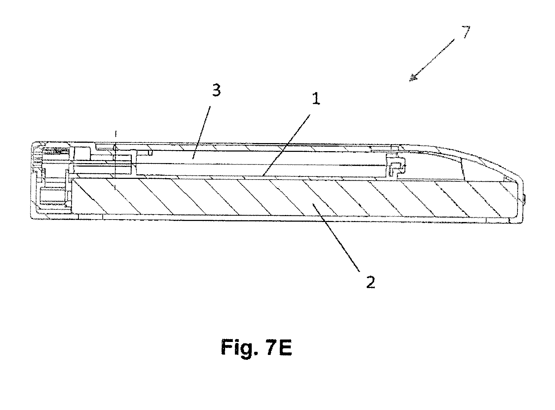

After the combined casing device 1 and portable electronic device 2 is positioned inside the cover jacket 30, as is shown in Figs. 7A to 7E, the cover jacket 30 can provide additional support to the casing device 1 and the portable electronic device 2 to hold them together. For example, the first and second curbing walls 34, 36 on the cover jacket 30 interact with each other to prevent the casing device 1 and the portable electronic device 2 from accidentally falling out of the cover jacket 30. In such a case, the cover jacket 30 unites the casing device 1 and the portable electronic device 2 to form a single unit 7.

When the casing device 1 is used with various portable electronic devices 2 of different thicknesses through the adjustment of the adjustable contact port 18' as described above (also see Figs. 5Y and 5Z), different cover jackets 30 can be provided to accommodate the different portable electronic devices 2. In other words, the cover jacket 30 can be determined according to the portable electronic device 2 used with the casing device 1. For example, when the portable electronic device 2 used with the casing device 1 has a larger thickness, the circumferential wall 32 of the cover jacket 30 can also have a larger thickness. When a thinner portable electronic device 2 is used with the casing device 1, the circumferential wall 32 of the cover jacket 30 can have a smaller thickness.

Although the portable electronic device 2 described in the above embodiments and shown in the various drawing figures as a mobile telephone, the various embodiments of the casing devices 1 are not so limited. The casing device 1 described herein can be configured to use with any of various portable electronic devices 2, including but not limited to cell phones with or without operating systems, personal data assistants (PDA), mobile computers, tablets, portable video games, MP3 players, digital cameras, video cameras, voice recorders, global positioning systems (GPS), scanners, or other portable electronic devices that use rechargeable batteries.

Different casing devices 1 can be formed for use with the various types of portable electronic devices 2 mentioned above. For example, different casing devices 1 can be configured for mounting onto a mobile phone and a video camera, respectively. In one example, such different casing devices 1 can have different first device compartments 10 for accommodating the respective different types of portable electronic devices 2 mentioned above. In another example, the different casing devices 1 can be configured to be mounted in the respective battery chambers 4 of the various types of portable electronic devices 2. In a preferred example where different portable electronic devices 2 are configured to have a similarly formed battery chamber 4, the different casing devices 1 can be formed to have a similar body portion 1' to be received and supported in the similarly formed battery chamber 4 of the different portable electronic devices 2. In such a case, the different portable electronic devices 2 can be used with various peripheral devices 3 through the use of the different casing devices 1.

In one embodiment, the different casing devices 1 can be formed with accessory compartments 20 having the same shape and size for receiving and supporting a universal peripheral device 3. For example, the second contact port 28, 28' on these different casing devices 1 can be formed to be the same as one another and compatible with the contact port 3c formed on the universal peripheral device 3. In one example, these different casing devices 1 can be formed with respective locking mechanisms identical to one another and complementary to the locking mechanism 25 on the universal peripheral device 3. The different casing devices 1 so formed are capable of receiving and supporting a universal peripheral device 3. In one example, the peripheral device 3 is in the form of a standard rechargeable battery 3. When such standard rechargeable battery 3 is used with the different casing devices 1, which are in turn mounted onto various types of portable electronic device 2, the standard rechargeable battery 3 is capable of supplying power to any of the various types of portable electronic device 2.

Additionally or alternatively, the various peripheral devices 3 can be configured in a standard form and thus can interchangeably mounted in one or more of the accessory compartments 20 in the casing device 1. For example, the various peripheral devices 3 including but not limited a thermometer, an optical scanner, a credit card reader, and a voice recorder, can be formed to have the same shape and size, the same contact port 3c, and the same locking mechanism. Such configuration of the various peripheral devices 3 can allow these peripheral devices 3 to be interchangeably used in connection with the different casing devices 1 to further enhance the versatility of the casing device 1 and the portable electronic device 2.

In a further embodiment, the casing device 1 can be formed to mount more than one peripheral device 3 to the portable electronic device 2. For example, the casing device 1 can be formed with multiple accessory compartments 20, each of which can be formed similarly to any of the accessory compartments 20 described in the above embodiments. Multiple peripheral devices 3, including but not limited a thermometer, an optical scanner, a credit card reader, and a voice recorder, can be used in the multiple accessory compartments 20 formed on the casing device 1. In one example, different types of peripheral devices 3 can be used together with the portable electronic device 2 to carry out their respective operations. For example, an optical scanner and a credit card reader can be used together with a portable electronic device 2, so as to make the portable electronic device 2 suitable for use by a store clerk to check out sales items in a retail store. In another example, multiple peripheral devices 3 of the same type can be used. For example, multiple rechargeable batteries 3 can be fitted in the multiple accessory compartments 20 of the casing device 1 and collectively supply power to the portable electronic device 2 after being mounted thereonto. The configuration of multiple accessory compartments 20 on the casting device 1 can allow the user to combine selected peripheral devices 3 with the portable electronic device 2 and thus increase the versatility of the casing device 1 and the portable electronic device 2.

In a preferred embodiment, the multiple accessory compartments 20 in the casing device 1 are formed to have the same size and shape. Such accessory compartments 20 can be interchangeably used to receive and support a selected peripheral device 3. For example, a selected peripheral device 3 can be fitted in any of the multiple accessory compartments 20 in the casing device 1. The accessory compartments 20 so formed can thus increase the versatility of the casing device 1 and the portable electronic device 2. Additionally or alternatively, the multiple peripheral devices 3, including but not limited to a thermometer, an optical scanner, a credit card reader, and a voice recorder, can be formed to have the same size and shape. These multiple peripheral devices 3 can be interchangeably received and supported in any of the same accessory compartments 20 in the casing device 1. The configuration of such similarly formed accessory compartments 20 in the casting device 1 and/or similarly formed peripheral devices 3 can allow the user to freely select peripheral devices 3 and mount the same in any of the multiple accessory compartments 20 in the casing device 1, thereby further increasing the versatility of the casing device 1 and the portable electronic device 2.

Thus, while there have shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described In connection with any disclosed form or embodiment of the invention may be incorporated in any other disclosed or described or suggested form or embodiment as a general matter of design choice. It is the intention, therefore, to be limited only as indicated by the scope of the claims appended hereto.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A casing device configured to attach a peripheral device to a portable electronic device, the casing device comprising:
a main body configured to be attached to a portable electronic device and have an accessory compartment for removably receiving and supporting a peripheral device;
wherein the main body allows the peripheral device to be electrically connected with the portable electronic device to supply power to and/or transfer data to and from the portable electronic device.

2. The casing device of claim 1, wherein the main body of the casing device is configured to allow access to the accessory compartment, whereby a user can insert a peripheral device into or remove a peripheral device from the accessory compartment in the main body after the casing device is attached to a portable device.

3. The casing device of claim 1, wherein the main body of the casing device is configured so that part of the main body can be received in a battery chamber of a portable electronic device to attach the casing device to such a portable electronic device.

4. The casing device of claim 1, wherein the main body of the casing device is formed with a device compartment for receiving and supporting a portable electronic device.

5. The casing device of claim 4, wherein the device compartment and the accessory compartment merge into a single compartment, whereby the casing device is capable of holding a portable electronic device and a peripheral device in the single compartment.

6. The casing device of claim 5, further comprising:
a first contact port located in the device compartment and configured for electrically connecting with a contact port on a portable electronic device; and
a second contact port located in the accessory compartment and configured for electrically contacting with a contact port on a peripheral device
wherein the first and second contact ports are electrically connected.

7. A casing device configured to attach a peripheral device to a portable electronic device, the casing device comprising:
a main body configured to support a portable electronic device and a peripheral device; and
an adjustable contact port having a movable portion movably attached to the main body of the casing device;
wherein the main body of the casing device is capable of supporting portable electronic devices of different sizes, when the adjustable contact port is adjusted in relation to the main body of the casing device.

8. The casing device of claim 7, wherein the main body of the casing device is formed to have a device compartment for receiving and supporting a portable electronic device.

9. The casing device of claim 7, wherein the main body of the casing device is formed with an accessory compartment for removably receiving and supporting a peripheral device.

10. The casing device of claim 7, wherein the movable portion of the adjustable contact port is configured to be separable from the main body of the casing device.

11. The accessory device of claim 7, wherein the main body of the casing device is formed with an access port to allow access to the accessory compartment, whereby a user can insert a peripheral device into or remove a peripheral device through the access port in the main body after the casing device is attached to a portable electronic device.

12. An accessory device for a portable electronic device, the accessory device comprising a peripheral device and a casing device, which comprises:
a main body configured to be attached to a portable electronic device and have an accessory compartment for removably receiving and supporting a peripheral device;
wherein the main body allows the peripheral device to be electrically connected with the portable electronic device to supply power to and/or transfer data to and from the portable electronic device.

13. The accessory device of claim 12, wherein the main body of the casing device comprises a plurality of accessory compartments for attaching one or more peripheral devices to a portable electronic device.

14. The accessory device of claim 12, wherein the peripheral device comprises a plurality of rechargeable batteries, one or more of which are being used in the casing device during its normal operation of charging an internal battery of a portable electronic device.

15. The accessory device of claim 12, wherein the main body of the casing device is formed with an access port to allow access to the accessory compartment, whereby a user can insert a peripheral device into or remove a peripheral device through the access port in the main body after the casing device is attached to a portable device.
